# EUROPÄISCHE PATENTSCHRIFT

(11) **EP 2 562 823 B1**
(45) Veröffentlichungstag und Bekanntmachung des Hinweises auf die Patenterteilung: **09.07.2014**
(21) Anmeldenummer: 12005742.7
(22) Anmeldetag: 08.08.2012
(51) Int. Cl.: H01L 31/042

(54) **PV-Modul mit Randschutzband**
PV module with edge protection tape
Module PV avec bande de protection des bords

(30) Priorität: 20.08.2011 DE 102011111193
(43) Veröffentlichungstag der Anmeldung: 27.02.2013
(73) Patentinhaber: Adensis GmbH, 01129 Dresden (DE)
(72) Erfinder: Beck, Bernhard, 97332 Volkach/Dimbach (DE)

(56) Entgegenhaltungen:
- DE-A1- 4 020 333
- DE-A1-102009 014 873
- US-A- 5 733 382

## Beschreibung

Die Erfindung bezieht sich auf ein rahmenloses, rechteckförmiges Photovoltaikmodul mit vier Seitenrändern, das an seiner Oberseite eine obere Glasscheibe und an seiner Unterseite eine Schutzfolie gegen das Eintreten von Feuchtigkeit umfasst, die bis zur oberen Glasscheibe reicht, wobei zwischen der oberen Glasscheibe und der Schutzfolie ein Mittel zur Umwandlung von Sonnenenergie in elektrische Energie angeordnet ist, und bei dem zumindest entlang eines der Seitenränder ein Bewährungsband vorgesehen ist.

Photovoltaikmodule an sich sind millionenfach bekannt, wobei die Mittel zur Umwandlung in der Regel Photovoltaikzellen sind, von denen eine Vielzahl elektrisch in Reihe geschaltet zwischen den beiden Glasscheiben angeordnet ist. Es sind auch Dünnschichtmodule bekannt, bei denen die Mittel auf den Einsatz einer Polymerfolie basieren. Den meisten Photovoltaikmodulen der genannten Art ist gemeinsam, dass die beiden Glasscheiben miteinander verbunden sind, z.B. über eine Kunststoffschicht aus Ethyl-Venyl-Acetat (EVA), in die das Mittel zur Erzeugung des Solarstroms eingebettet ist. Die Verbindung muss im gesamten umlaufenden Randbereich der PV-Module frei von Lunkern, Rissen und dergleichen sein, um das zwischen den Glasscheiben befindliche Mittel vor Feuchtigkeit zu schützen. Bereits die Korrosion und die einhergehende degradierende Leitfähigkeit einer einzigen Photovoltaikzelle des Moduls reduziert die Leistungsausbeute des gesamten PV-Moduls. Schreitet die Korrosion soweit voran, dass es zu einer Unterbrechung in der Serienschaltung der PV-Zellen kommt, führt dies zu einem Ausfall des Moduls und es muss ersetzt werden. Es sind auch Photovoltaikmodule bekannt, bei denen lediglich eine einzige Glasscheibe an der Moduloberseite verwendet ist, und an der Modulunterseite das, ggf. auf einem Trägersubstrat angeordnete, Mittel in eine Kunststoffschicht eingebettet ist. Die Kunststoffschicht ist von unten her mit einer Schutzfolie, die in der Regel aus Tedlar gefertigt ist, versehen.

Zur Erzielung einer hohen Dichtigkeit ist es bei rahmenlosen Photovoltaikmodulen bekannt, die beiden Glasscheiben mit einem Versatz zueinander zu versehen, der eine Kehle bildet, in die ein Dichtmittel eingebracht ist. Das Dichtmittel wiederum ist an seiner freien, nicht von den Glasscheiben begrenzten Oberfläche von der genannten Schutzfolie geschützt, die ein Eindringen von Feuchtigkeit in das Dichtmittel verhindern soll. Es sind auch Photovoltaikmodule mit Rahmen bekannt, bei denen die Dichtigkeit über das Verkleben des Rahmens mit den Rändern der beiden Glasscheiben erreicht wird.

Ein Photovoltaikmodul der genannten Art ist aus der US 5,733,382 A1 bekannt. Dort ist ein die Seitenränder des Moduls umgreifender Rahmen gezeigt, der durch ein Polyethylenband ersetzt werden kann. Auf besondere Eigenschaften des Bandes wird dort nicht näher eingegangen.

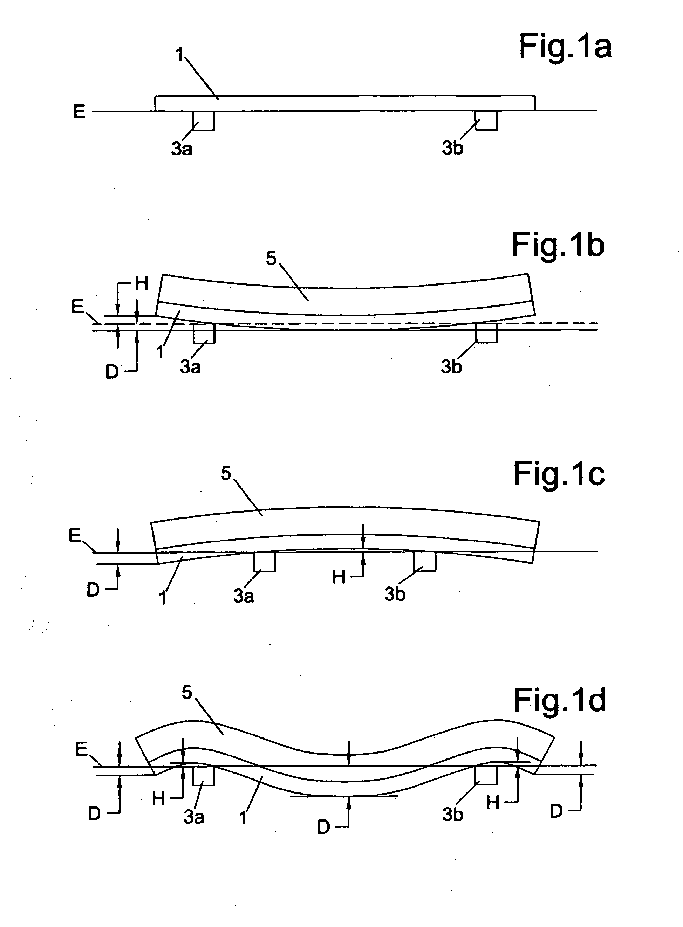

Im Winter, bei schneebedeckten Photovoltaikmodulen kann folgende Situation eintreten, wie sie anhand der Figur 1 illustriert ist. Die Figur 1 a zeigt dabei einen Querschnitt durch ein Photovoltaikmodul 1 längs zur Dachkante, entsprechend längs zur Dachrinne, wenn das Modul 1 frei von Schnee ist. Das Photovoltaikmodul 1 liegt auf zwei Tragholmen 3a, 3b auf, die senkrecht zur Dachkante verlaufen, also zwischen der Dachkante und dem Dachfirst. Auf den Tragholmen 3a, 3b ist eine Vielzahl von Photovoltaikmodulen 1 übereinander liegend montiert. Im montierten Zustand liegen die PV-Module eben auf den Tragholmen 3a, 3b auf. Das Aufliegen erfolgt auf einer Ebene E, die in der Oberfläche der beiden Dachholme 3a, 3b verläuft.

In den Figuren 1b bis 1d ist jeweils eine Situation gezeigt, wenn eine Schneelast 5 auf dem Photovoltaikmodul 1 ruht. Die Schneelast 5 bewirkt ein Durchbiegen der relativ elastischen Photovoltaikmodule 3, die je nach Anordnung der Tragholme 3a, 3b unterschiedlich ausfallen kann. In der Figur 1b sind die Tragholme 3a, 3b in Bezug zur Länge des PV-Moduls 1 relativ weit auseinander angeordnet, was zu einer zentralen Durchbiegung D und zu jeweils einer Erhöhung H an den Rändern des PV-Moduls 1 führt. Bei den enger zusammenliegenden Tragholmen nach der Figur 1c erfolgt die Erhöhung H in der Mitte zwischen den Tragholmen 3a, 3b und an den jeweiligen Rändern liegt eine Durchbiegung D vor. Die Figur 1d zeigt noch eine mögliche Situation, die bei PV-Modulen 1 großer Länge auftreten kann. Es herrscht eine Durchbiegung D in der Mitte zwischen den Tragholmen. Seitlich jenseits der Tragholme 3a, 3b bildet sich aufgrund der Steifigkeit der PV-Module 1 jeweils eine Erhöhung H auf, die sich an dem äußeren Rand des PV-Moduls 1 aufgrund der Schneelast 5 zu jeweiligen Durchbiegungen D entwickelt haben.

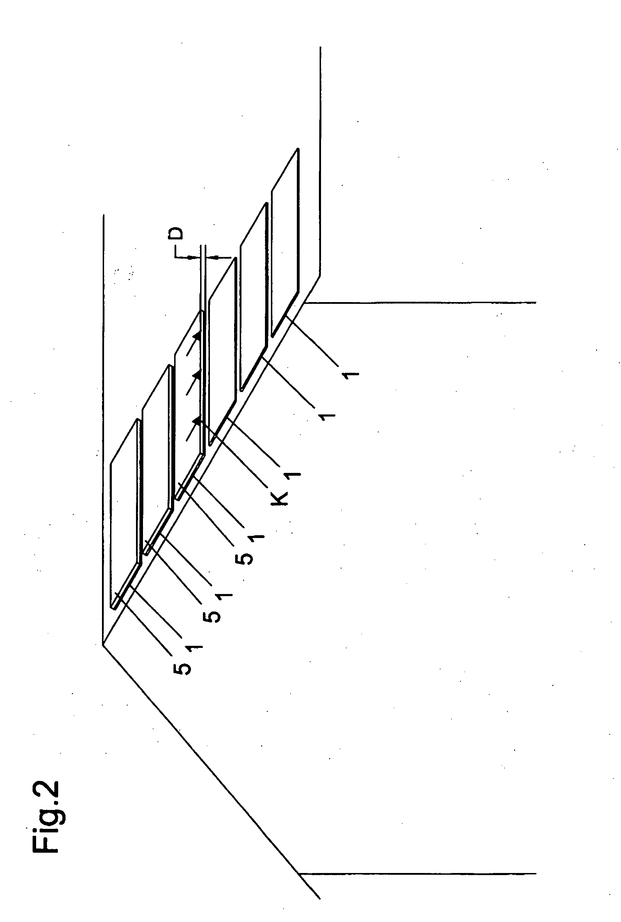

Die Durchbiegungen D und Erhöhungen H sind zum leichteren Verständnis stark übertrieben dargestellt. In der Realität betragen sie nur wenige Millimeter, was bei einigen Begebenheiten zu Schäden durch abrutschendes Eis oder abrutschenden Schnee führen kann. Dies ist anhand der Figur 2 illustriert, die eine Dachfläche mit sechs Reihen von montierten Photovoltaikmodulen 1 zeigt, deren drei oberen Reihen mit Schnee oder Eis bedeckt sind und deren drei unteren Reihen schnee- und eisfrei sind. Die PV-Module 1 der drei oberen Reihen sind durchgebogen und weisen in ihrer Mitte jeweils die Durchbiegung D nach der Figur 1b auf, wohingegen die darunter liegenden Reihen plan sind, wie es in der Figur 1 a gezeigt ist. Rutscht bei einer solchen Begebenheit die Eisplatte 5 nach unten, so wird ihr unterer Teil, der aufgrund der Durchbiegung D auf einem Niveau unterhalb der Ebene E liegt, auf den Rand der oberen Glasscheibe des eisfreien darunter liegenden PV-Moduls 1 auftreffen. Dieses ist durch drei Pfeile K angedeutet, die die Kraft symbolisieren, die beim Abrutschen auf den Rand und die Kante des unten angeordneten PV-Moduls einwirkt. Durch das Auftreffen der Eisplatte kann es zu einer Beschädigung des PV-Moduls insbesondere durch Risse und Löcher in der Schutzfolie aus Tedlar oder auch durch eine Abplatzung am Glasrand kommen. Je nach Größe der Durchbiegung D besteht auch für die untere Glasscheibe die Gefahr einer Beschädigung, sowie für die Schutzfolie und das Dichtmittel die Gefahr, verformt zu werden. Dadurch kann die Dichtigkeit des Modulrandes nicht mehr gegeben sein, und es kommt zu einem Eindringen von Feuchtigkeit zwischen die beiden Glasscheiben oder je nach Modultyp zwischen der oberen Glasscheibe und der die Unterseite des Moduls bildenden Schutzfolie. Mit dem Eindringen von Feuchtigkeit gehen die schädlichen Auswirkungen auf die Photozellen oder die Lichtumwandlungsfolie einher. Es soll noch angemerkt werden, dass diese Gefahr bei gerahmten PV-Modulen relativ gering ist, da zum einen die Durchbiegung D wegen der Steifigkeit des Rahmens kleiner ist und zum anderen der Rahmen selber bereits einen gewissen Schutz vor einer Kantenbeschädigung bietet. Die Rahmung ist allerdings sehr kostenintensiv und auch dem optischen Erscheinungsbild abträglich, so dass allgemein rahmenlose PV-Module bevorzugt werden.

Ausgehend von der oben ausgeführten Überlegung zur möglichen Beschädigung der Seitenränder eines rahmenlosen Photovoltaikmoduls durch abrutschendes Eis, hat es sich vorliegende Erfindung zur Aufgabe gemacht, mit einer einfachen und günstigen Maßnahme diesem Effekt entgegenzuwirken.

Diese Aufgabe wird erfindungsgemäß dadurch gelöst, dass das Bewährungsband Fasern enthält, die in eine Vorzugsrichtung quer zum Seitenrand ausgerichtet sind. Es ist dabei selbstverständlich, dass der zumindest eine Seitenrand derjenige ist, die nach dem Verbauen des Photovoltaikmoduls in Firstrichtung gesehen oben liegt. Besonders vorteilhaft ist die Verwendung eines eigens auf den vorliegenden Verwendungszweck zugeschnittenen Bewährungsbandes, welches sich dadurch auszeichnet, dass es vorwiegend, ggf. auch ausschließlich, Glas- oder Karbonfasern quer zu seiner Längsachse enthält. Die üblichen Bewährungsbänder in Form von Verpackungs-, Montage- oder Dichtbänder sind mit Fasern verstärkt, die insbesondere längs zur Zugrichtung des Bandes verlaufen. Anders verhält es sich bei vorliegendem Bewährungsband: Hier verlaufen die Fasern in eine Vorzugsrichtung quer zum Modulrand, was implizit auch quer zur Längsrichtung des Bewährungsbandes entspricht.

Das Bewährungsband ist insbesondere selbstklebend und enthält Fasern, die vorzugsweise aus Glas oder Carbon bestehen oder zumindest als Bestandteil haben.

Bei Verwendung von PV-Modulen mit zwei Glasscheiben ist es vorteilhaft, wenn die Seitenränder der ersten und die zweiten Glasscheibe in Scheibenrichtung gesehen einen Versatz zueinander aufweisen, so dass eine Kehle gebildet wird, in welche ein Dichtmittel, insbesondere Butyl, eingebracht ist. Das Bewährungsband erstreckt sich dann zumindest über die Seitenrandfläche der ersten Glasscheibe, über einen daran angrenzenden, streifenförmigen Bereich der Oberseite der ersten Glasscheibe und über zumindest einen Teilbereich des Dichtmittels. Bevorzugt ist es jedoch, wenn sich das Bewährungsband über den Gesamtbereich des sich entlang der Seitenkante befindlichen Dichtmittels und darüber hinaus noch über einen streifenförmigen Bereich der Unterseite der zweiten Glasscheibe erstreckt.

Bei PV-Modulen mit nur einer Glasscheibe und einer sich darunter befindlichen Kunststoffschicht, in welcher das Mittel zur Umwandlung von Solarenergie in elektrische Energie eingebettet ist, erstreckt sich das Bewährungsband zumindest über die Seitenrandfläche der ersten Glasscheibe, über einen daran angrenzenden, streifenförmigen Bereich der Oberseite der ersten Glasscheibe und über einen weiteren streifenförmigen Bereich der Unterfläche der Schutzfolie.

Die von rutschendem Eis oder Schnee herrührenden Kräfte wirken auf den Seitenrand des PV-Moduls ein und tendieren dazu, das Bewährungsband von dem Seitenrand wegzureißen. Dem wird dadurch entgegen getreten, dass das Bewährungsband auf einen schmalen Bereich (von ca. 1 cm bis 3 cm) der oberen Glasseite der ersten Glasscheibe geklebt ist und gegebenenfalls auch noch auf einen schmalen Bereich der Unterseite der zweiten Glasscheibe oder alternativ je nach Modultyp noch auf einen schmalen Bereich der unten liegenden Schutzfolie. Es bedarf dann ein Überwinden der Scherkräfte zwischen dem Bewährungsband und dem Glasbereich, um das mit dem Glas verklebte Bewährungsband von der Glasscheibe zu lösen. Die dazu erforderliche Scherkraft kann von der rutschenden Eisplatte nicht aufgebracht werden, so dass das Bewährungsband dauerhaft über den zu schützenden Rand- und Kantenbereich verbleibt.

Weitere Vorteile und Ausgestaltungen der Erfindung ergeben sich aus der Beschreibung eines Ausführungsbeispiels anhand der Figuren. Es zeigen:
- Fig. 1a-1d: Verformungsbeispiele eines Photovoltaikmoduls bei Schneelast;
- Fig. 2: eine Gefahrensituation zu einer Kantenbeschädigung durch eine rutschende Eisplatte;
- Fig. 3: einen Querschnitt durch einen Modulrand gemäß der Erfindung bei einem ersten Modultyp;
- Fig. 4: einen Querschnitt durch einen Modulrand gemäß der Erfindung bei einem zweiten Modultyp;
- Fig. 5: einen Querschnitt durch einen Modulrand gemäß der Erfindung bei einem dritten Modultyp;
- Fig. 6: eine perspektivische Ansicht eines Bewährungsbandes, teilweise auf einem Wickeldorn aufgewickelt; und
- Fig. 7: Ein Bewährungsband mit skizzierter Faserstruktur.

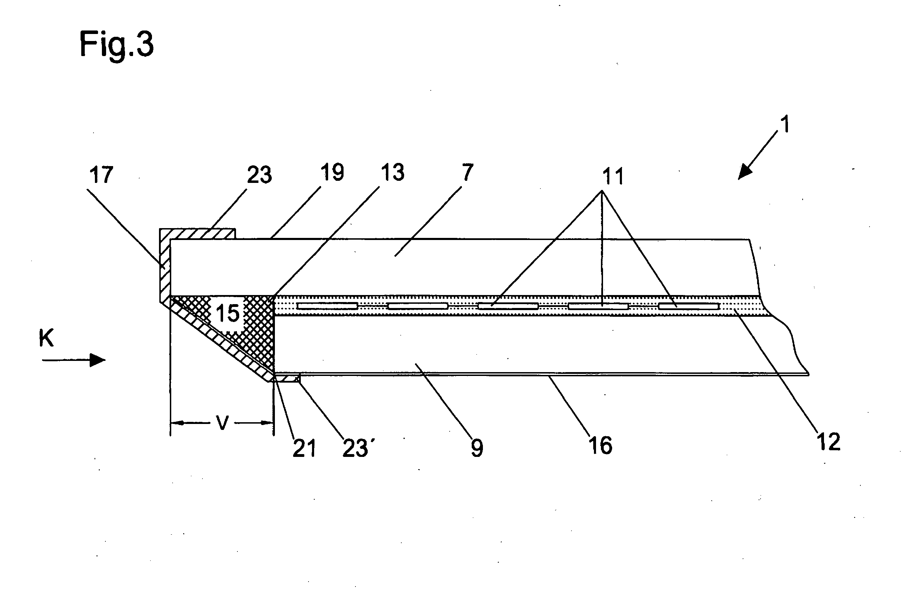

In der Figur 3 ist mit 1 das Photovoltaikmodul bezeichnet, welches eine erste, obere Glasscheibe 7 und eine zweite, unten angeordnete Glasscheibe 9 umfasst. Zwischen den Glasscheiben 7, 9 ist als Mittel zur Umwandlung von Sonnenenergie in elektrische Energie eine Vielzahl von Photovoltaikzellen 11 angeordnet, die miteinander in Reihe geschaltet sind. An einer Stelle des Photovoltaikmoduls 1 sind Anschlussleitungen (nicht gezeigt) herausgeführt, mit deren Hilfe das PV-Modul 1 an benachbarte PV-Module 1 oder an eine Strangsammelleitung angeschlossen werden kann. Die Glasscheiben 7, 9 sind unter Einschluss der Photovoltaikzellen 11 miteinander verklebt. Die Verklebung erfolgt mit Hilfe einer Kunststoffmasse 12, insbesondere EVA (Ethyl-Vinyl-Acetat), in welche die Photovoltaikzellen 11 eingebettet sind.

An zumindest einem Rand des rechteckigen Photovoltaikmoduls 1 ist die obere Glasscheibe 7 um einen Versatz V in Richtung der Scheibenebene gesehen, nach außen verschoben. So wird eine Kehle 13 gebildet, die mit einer Dichtsubstanz 15 gefüllt ist. Die Dichtsubstanz verhindert in unbeschädigtem Zustand zuverlässig das Eindringen von Feuchtigkeit zwischen die Glasscheiben 7, 9. Das Eindringen von Feuchtigkeit muss vermieden werden, da es zu einer Korrosion der Photovoltaikzellen und ihrer Anschlüsse führt. Ein Ausfall des Photovoltaikmoduls 1 ist dann nur noch eine Frage der Zeit. Die Figur 3 zeigt noch eine an sich bekannte Schutzfolie 16, die zurzeit üblicherweise aus Tedlar gefertigt ist, und die die gesamte Unterseite der unteren Glasscheibe 9 bedeckt. Die Feuchtigkeits-Schutzfolie 16 muss insbesondere im Randbereich des PV-Moduls 1 vor mechanischen Beschädigungen geschützt werden, um das Eindringen der schädlichen Feuchtigkeit zu den PV-Zellen 11 hin zu verhindern. Dies ist insbesondere bei Photovoltaikmodulen wichtig, bei denen kein Versatz V der Glasscheiben vorliegt und kein entsprechender weiterer Schutz gegen das Eindringen von Feuchtigkeit über das Dichtmittel 15 gegeben ist.

Wie es zuvor im einleitenden Teil anhand der Figuren 1 und 2 erläutert wurde, besteht durch eine abrutschende Eis- oder Schneeschicht 5 die Gefahr, dass eine Kraft K auf den durchgebogenen Rand des Photovoltaikmoduls 1 einwirkt. Die dadurch entstehende Gefahr einer Beschädigung wird durch ein Bewährungsband 17 reduziert, welches sich zumindest von der oberen Kante 19 der oberen Glasscheibe 7 über die Dichtmasse 15 hinweg bis zur unteren Kante 21 der unteren Glasscheibe erstreckt. Vorteilhafterweise ist das Bewährungsband 17 noch auf einen vorgebbaren Streifenbereich 23 und 23', der sich an die Kanten 19 bzw. 21 anschließt, auf die Glasoberseiten der ersten, bzw. der Glasunterseite der zweiten Glasscheibe 7, 9 angeordnet. Die in die Glasscheiben 7, 9 hineinreichenden Streifenbereiche 23, 23' des Bewährungsbands 17 sorgen für eine hohe Klebefestigkeit zwischen dem Bewährungsband 17 und dem Photovoltaikmodul 1.

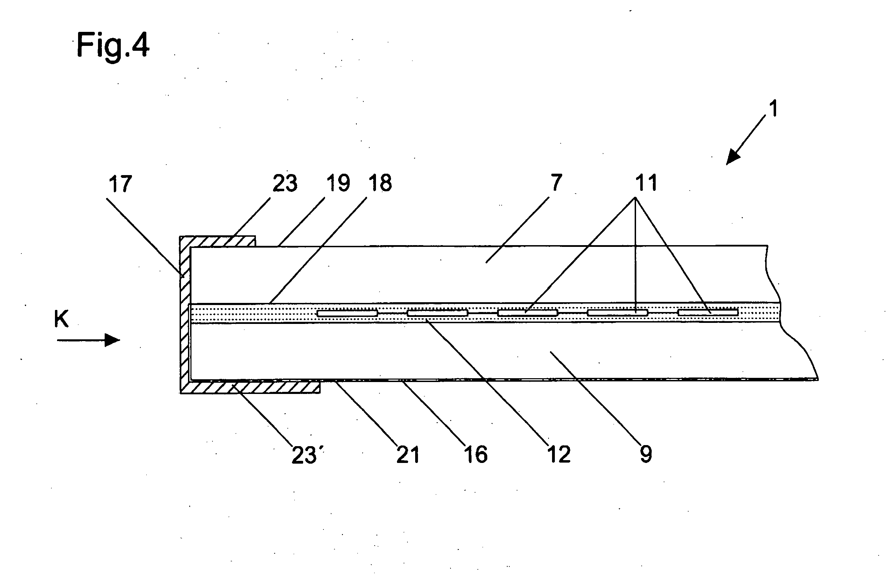

In einer in der Figur 4 gezeigten Ausführungsform sind zwei gleich große Glasscheiben 7, 9, deckungsgleich, also ohne Versatz V zueinander, miteinander verbunden. Gleiche Teile sind mit gleichen Bezugszeichen versehen. Aufgrund des fehlenden Dichtmittels 15 aus Butyl ist hier das Bewährungsband 17 besonders geeignet, den Seitenrand des PV-Moduls 1 vor einer Beschädigung zu bewahren. Insbesondere auch in Hinblick darauf, dass bei den bekannten PV-Modulen 1 die Schutzfolie 16 an der unteren Kante 18 der oberen Glasscheibe 7 endet. Diese Strelle bietet einen exponierten Angriffspunkt für herab rutschenden Schnee.

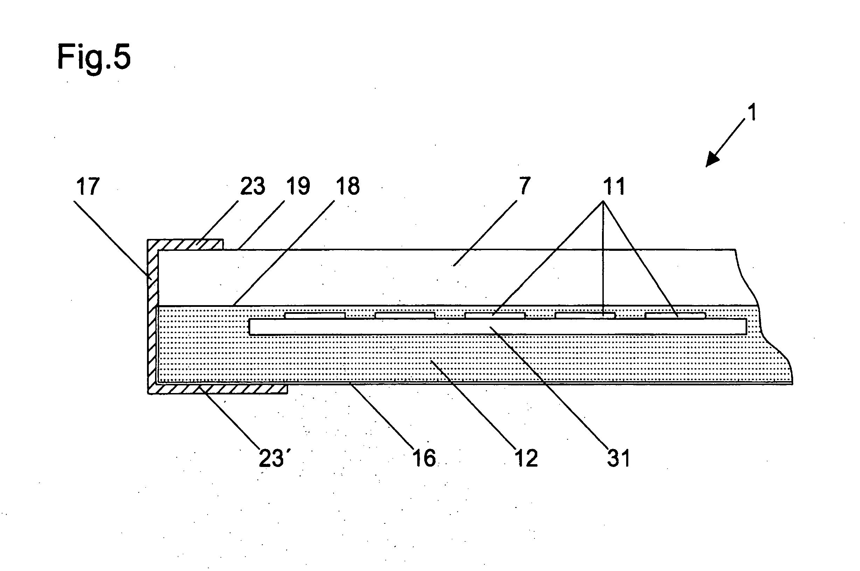

In der Figur 5 ist ein dritter Modultyp gezeigt, bei dem das Mittel zur Umwandlung von Sonnenenergie in elektrische Energie in einem Beschichtungsverfahren auf ein Trägersubstrat 31 aufgebracht ist. Das Mittel wird nach dem Auftragen in einem Dünnschichtverfahren zu einzelnen Photovoltaikzellen 11 geätzt oder geschnitten, wobei die elektrischen Verbindungen zwischen den PV-Zellen 11 über das Trägersubstrat 31 bereitgestellt werden können. Analog zu den aus der Halbleiterfertigung bekannten Verfahren können beliebige Schichtfolgen von elektrisch isolierendem, elektrisch leitendem oder halbleitendem Material auf die Trägerplatte 31 aufgebracht und in eine gewünschte Konfiguration gebracht werden. Das Trägersubstrat 31 ist zusammen mit dem auf ihm angeordneten Mittel 11 in einer Kunststoffschicht 12 aus EVA eingebettet. Die Unterseite der Kunststoffschicht 12 stellt zugleich die Unterseite dar, auf welche die Schutzfolie 16 angeordnet ist, die dann die Unterseite des Photovoltaikmoduls 1 bildet. Die Schutzfolie 16 reicht bis zu der unteren Kante 18 der Glasscheibe 7. Um sie vor der bereits vielfach angesprochenen Beschädigung vor herab rutschendem Eis zu schützen, ist auch in dieser Ausführungsform das Bewährungsband 17 vorgesehen, welches sich über den Seitenrand des PV-Moduls 1 bis über einen streifenförmigen Teilbereich 23 an der Oberseite der Glasscheibe 7 und einen streifenförmigen Teilbereich 23' an der Unterseite des Photovoltaikmoduls 1, also der Schutzfolie 16, erstreckt.

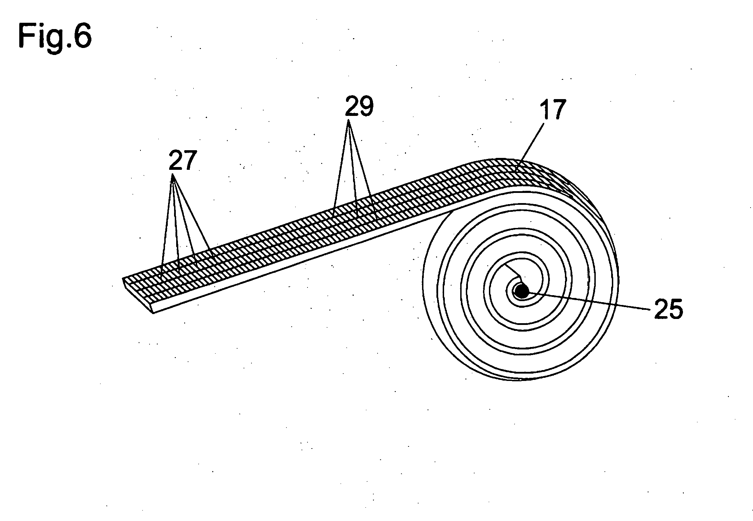

In der Figur 6 ist noch das verwendete Bewährungsband 17 gezeigt, wie es auf einem Wickeldorn 25, z.B. aus Pappe oder Kunststoff, in bekannter Weise aufgewickelt ist. Vor oder nach der Montage des Photovoltaikmoduls 1 auf den Trägerholmen 3a, 3b wird der zu schützende Rand nach der in der Figur 3 bzw. Figur 4 gezeigten Weise mit dem Bewährungsband 17 versehen. In der Figur 5 ist noch zu erkennen, dass das Bewährungsband 17 eine Vielzahl von stabilisierenden und reißfesten Querfasern 27 hat, die quer zur Abwickelrichtung oder zur Zugrichtung des Bewährungsbandes 17 verlaufen und einen geringeren Anteil an Längsfasern 29, die in Zugrichtung also längsdes Bewährungsbandes verlaufen. Der Anteil von quer zur Zugrichtung verlaufenden Querfasern 27 sollte mindestens 60 %, vorzugsweise zwischen 70 % und 90 % aller im Bewährungsband 17 enthaltenen Fasern 27, 29 liegen. Ein besonders bevorzugter Anteil liegt zwischen 75% und 85%. Die Quer- und Längsfasern 27, 29 bestehen aus Glas oder Carbon oder enthalten zumindest einen hohen Anteil an diesen Materialien.

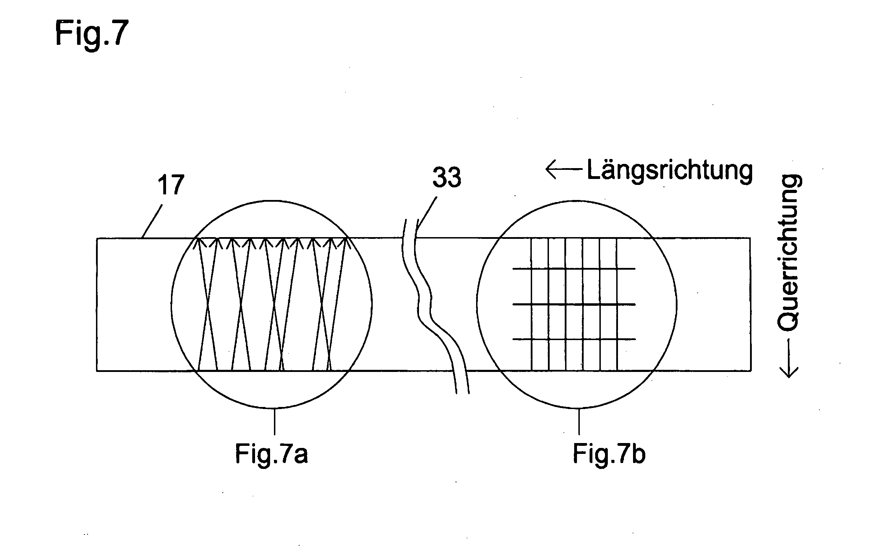

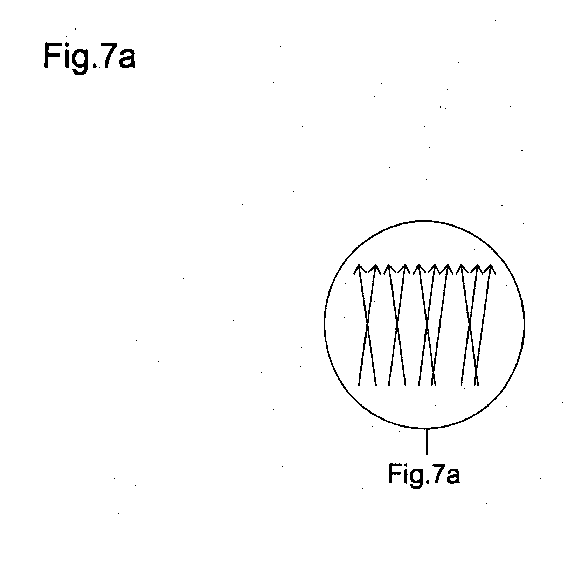

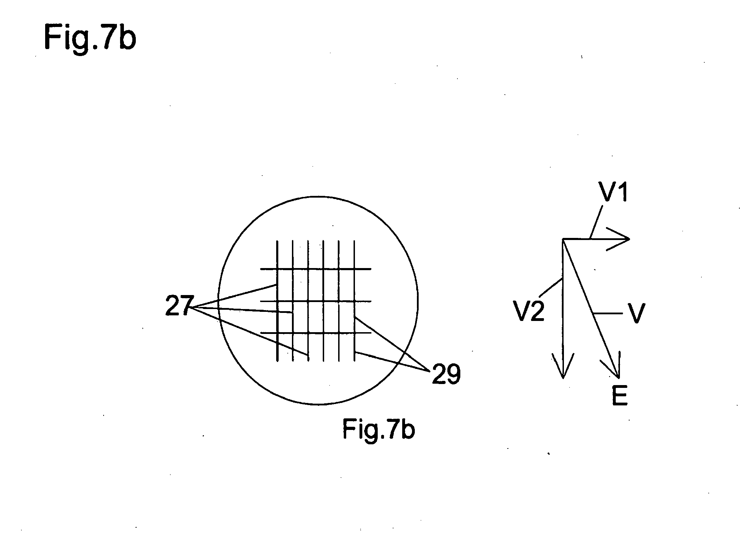

In der Figur 7 ist das Bewährungsband 17 in einer Aufsicht vor der Applikation an den Rand des Photovoltaikmoduls 1 gezeigt. Die Figur 7 weist eine Schnittlinie 33 auf, die das Bewährungsband 17 in eine linke und eine rechte Darstellung, entsprechend zwei unterschiedlichen Ausführungen des Bewährungsbandes, gliedert. An der rechten Seite der Figur ist noch zwei senkrecht zueinander stehende Koordinatenlinien gezeigt, von denen die x-Richtung in Richtung des Seitenrandes des Photovoltaikmoduls 1 verläuft und die γ-Richtung quer dazu. Die vorliegend verwendete Formulierung "Vorzugsrichtung quer zum Seitenrand" soll bedeuten, dass die Vorzugsrichtung der Fasern, wenn sie als Vektor gesehen wird, einen Betrag in Y-Richtung aufweist, der größer ist als der Betrag in x-Richtung. Es sollen also sowohl Fasern in allen Richtungen innerhalb des eingezeichneten Sektors 35 umfasst sein, als auch alle Verhältnisse von reinen Querzu Längsfasern 27 bzw. 29, die in Summe in diesen Bereich 35 fallen. So illustriert die linke Figurhälfte ein Bewährungsband 17, dessen Fasern sehr steil, also nahezu vollständig quer zum Seitenrand verlaufen. Alle Fasern, die in dem plus/minus 45° Winkel zur y-Achse verlaufen, weisen eine Vorzugfsrichtung quer zur Längskante des Moduls auf. Die rechte Figurhälfte hingegen zeigt reine Querfasern 27 und reine Längsfasern 29, die jeweils in Richtung der y-Achse beziehungsweise in Richtung der x-Achse verlaufen. Ein resultierender Vektor v, der die Gewichtung der verbauten Längs- und Querfasern zueinander symbolisiert, weist eine größere Vektorkomponente v2 in y-Richtung auf, als der Vektor v1, der die Vektorkomponente entlang der Längskante des Moduls repräsentiert. Bei der genannten Gewichtung sind sowohl die Anzahl als auch der Durchmesser bzw. die Querschnittsfläche zu berücksichtigen, da die Längs- oder Querfasern 29, 27 in ihrer Form und Abmessung verschieden sein können.

### Bezugszeichenliste

- 1: Photovoltaikmodul
- 3a, 3b: Trägerholm
- 5: Schnee-/Eisschicht
- 7: obere Glasscheibe
- 9: untere Glasscheibe
- 11: Photovoltaikzelle
- 12: Ethyl-Vinyl-Acetat Kunststoffschicht
- 13: Kehle
- 15: Dichtmittel
- 16: Schutzfolie
- 17: Bewährungsband
- 18: untere Kante obere Glasscheibe
- 19: obere Kante obere Glasscheibe
- 21: untere Kante untere Glasscheibe
- 23, 23': Streifenbereich
- 25: Wickedorn
- 27: Querfaser
- 29: Längsfaser
- 31: Trägerplatte
- 33: Schnittlinie
- 35: Sektor
- D: Durchbiegung
- E: obere Ebene bei eisfreier Glasscheibe
- K: Kraft

## Patentansprüche

1. Rahmenloses, rechteckförmiges Photovoltaikmodul (1) mit vier Seitenrändern, das an seiner Oberseite eine obere Glasscheibe (7) und an seiner Unterseite eine Schutzfolie (16) gegen das Eintreten von Feuchtigkeit umfasst, die bis zur oberen Glasscheibe (7) reicht, wobei zwischen der oberen Glasscheibe und der Schutzfolie ein Mittel (11) zur Umwandlung von Sonnenenergie in elektrische Energie angeordnet ist, und bei dem zumindest entlang eines der Seitenränder ein Bewährungsband (17) vorgesehen ist, **dadurch gekennzeichnet, dass** das Bewährungsband (17) Fasern (27) enthält, die in eine Vorzugsrichtung quer zum Seitenrand ausgerichtet sind.

2. Photovoltaikmodul nach Anspruch 1, **dadurch gekennzeichnet, dass** die Fasern (27) Glasfasern oder Karbonfasern sind.

3. Photovoltaikmodul nach einem der Ansprüche 1 oder 2, **dadurch gekennzeichnet, dass** das Mittel (11) in eine Kunststoffschicht (12), insbesondere eine Ethyl-Vinyl-Acetat (EVA-Schicht) Schicht, eingebettet ist, an deren Unterseite sich die Schutzfolie (16) befindet.

4. Photovoltaikmodul nach einem der Ansprüche 1 bis 3, **dadurch gekennzeichnet, dass** sich das Bewährungsband (27) über den Seitenrand der oberen Glasscheibe (7), über einen daran angrenzenden, ersten streifenförmigen Bereich (23) der Oberfläche der oberen Glasscheibe (7) und über einen weiteren streifenförmigen Bereich (23') der Unterfläche der Schutzfolie (16) erstreckt.

5. Photovoltaikmodul nach einem der Ansprüche 1 bis 4, **dadurch gekennzeichnet, dass** das Mittel (11) zwischen der oberen Glasscheibe (7) und einer unteren Glasscheibe (9) angeordnet ist.

6. Photovoltaikmodul nach Anspruch 5, **dadurch gekennzeichnet, dass** die Seitenränder der oberen und der unteren Glasscheibe (7, 9) in Scheibenebene gesehen einen Versatz (V) zueinander aufweisen, so dass eine Kehle (13) gebildet ist, in welche ein Dichtmittel (15), insbesondere Butyl, eingebracht ist.

7. Photovoltaikmodul nach einem der Ansprüche 5 oder 6, **dadurch gekennzeichnet, dass** das Mittel (11) auf einem Trägersubstrat (31) aufgebracht ist, welches zusammen mit dem Mittel (11) in die Kunststoffschicht (12) eingebettet ist.

## Claims

1. A frameless rectangular photovoltaic module (1) with four lateral edges, comprising an upper glass panel (7) on its upper side and a protective film (16) on its bottom side against the ingress of moisture, the protective film (16) extending up to the upper glass panel (7), wherein a means (11) for the conversion of solar energy into electrical energy is arranged between the upper glass panel and the protective film, and wherein a reinforcement tape (17) is provided at least along one of the lateral edges, **characterized in that** the reinforcement tape (17) contains fibers (27) which are aligned in a preferential direction transversely in relation to the lateral edge.

2. The photovoltaic module according to Claim 1, **characterized in that** the fibers (27) are glass fibers or carbon fibers.

3. The photovoltaic module according to any one of Claims 1 or 2, **characterized in that** the means (11) is embedded in a plastic layer (12), more particularly in an ethylene vinyl acetate (EVA) layer on the bottom side of which the protective film (16) is disposed.

4. The photovoltaic module according to any one of Claims 1 to 3, **characterized in that** the reinforcement tape (27) extends across the lateral edge of the upper glass panel (7), across an adjacent first strip-like area (23) of the surface of the upper glass panel (7), and across a further strip-like area (23) of the bottom surface of the protective film (16).

5. The photovoltaic module according to any of Claims 1 to 4, **characterized in that** the means (11) is arranged between the upper glass panel (7) and the upper glass panel (9).

6. The photovoltaic module according to Claim 5, **characterized in that** the lateral edges of the upper and lower glass panels (7, 9) comprise an offset (V) in relation to each other as seen in the plane of the panel, with the result that a flute (13) is formed into which a sealant (15), more particularly butyl, is applied.

7. The photovoltaic module according to any one of Claims 5 or 6, **characterized in that** the means (11) is applied onto a substrate (31) which is embedded in the plastic layer (12) along with the means (11).

## Revendications

1. Module photovoltaïque (1) rectangulaire sans cadre, doté de quatre bords latéraux, comportant sur la partie supérieure une vitre supérieure en verre (7) et sur la partie inférieure un film de protection (16) pour empêcher la pénétration d'humidité qui s'étend jusqu'à la vitre supérieure en verre (7), un dispositif (11) de conversion de l'énergie solaire en énergie électrique étant disposé entre la vitre supérieure en verre et le film de protection sur lequel une bande d'armature (17) est placée au minimum le long de l'un des bords latéraux, caractérisée en ceci que la bande d'armature (17) contient des fibres (27) orientées dans une direction préférentielle perpendiculairement au bord latéral.

2. Module photovoltaïque conformément à la revendication 1, caractérisé en ceci que les fibres (27) sont des fibres de verre ou des fibres de carbone.

3. Module photovoltaïque conformément aux revendications 1 et 2, caractérisé en ceci que le dispositif (11) est incorporé dans une couche de plastique (12), en particulier une couche d'éthylène-acétate de vinyle (couche EVA) dont la partie inférieure est recouverte d'un film de protection (16).

4. Module photovoltaïque conformément à l'une des revendications 1 à 3, caractérisé en ceci que la bande d'armature (27) s'étend par-dessus le bord latéral de la vitre supérieure en verre (7), par-dessus une première zone adjacente en forme de bande (23) de la surface de la vitre supérieure en verre (7) et par-dessus une seconde zone en forme de bande (23') de la surface inférieure du film de protection (16).

5. Module photovoltaïque conformément à l'une des revendications 1 à 4, caractérisé en ceci que le dispositif (11) est disposé entre la vitre supérieure en verre (7) et une vitre inférieure en verre (9).

6. Module photovoltaïque conformément à la revendication 5, caractérisé en ceci que les bords latéraux de la vitre supérieure et inférieure en verre (7, 9) présentent un décalage (V) entre eux du point de vue de la vitre, provoquant la formation d'un creux (13) dans lequel est placé un mastic d'étanchéité (15), en particulier du butyle.

7. Module photovoltaïque conformément à l'une des revendications 5 ou 6, caractérisé en ceci que le dispositif (11) est placé sur un substrat de support (31) qui est incorporé dans la couche de plastique (12) avec le dispositif (11).
